# EUROPEAN PATENT SPECIFICATION

(11) **EP 1 426 341 B1**
(45) Date of publication and mention of the grant of the patent: **10.05.2006**
(21) Application number: 03078553.9
(22) Date of filing: 12.11.2003
(51) Int. Cl.: C03B 37/018

(54) **Method of manufacturing an optical fibre.**
Verfahren zum Herstellen einer optischen Faser
Procédé de fabrication d'une fibre optique

(30) Priority: 05.12.2002 NL 1022087
(43) Date of publication of application: 09.06.2004
(73) Proprietor: Draka Fibre Technology B.V., 5651 CA Eindhoven (NL)
(72) Inventor: Simons, Dennis Robert, 5624 AT Eindhoven (NL); Jansen, Henrikus Lambertus Maria, 5571 BS Bergeijk (NL); Ypma, Gerard Johan Albert, 5685 GV Best (NL); Deckers, Rob Hubertus Matheus, 5615 CJ Eindhoven (NL)
(74) Representative: Valkonet, Rutger

(56) References cited:
- US-A- 4 314 833
- US-A- 5 028 246
- PATENT ABSTRACTS OF JAPAN vol. 2002, no. 02, 2 April 2002 (2002-04-02) & JP 2001 294429 A (SHIN ETSU CHEM CO LTD), 23 October 2001 (2001-10-23)

## Description

The present invention relates to a method of manufacturing an optical fibre by carrying out one or more a chemical vapour deposition reactions in a glass substrate tube, which method comprises the following steps:
i) supplying one or more doped or undoped glass-forming precursors to the substrate tube,
ii) supplying a stoichiometric excess of oxygen to the substrate tube,
iii) setting up a reaction in the substrate tube between the reactants supplied in steps i) and ii) so as to effect the deposition of one or more glass layers on the interior of the substrate tube,
iv) subjecting the substrate tube thus coated in step iii) to a collapsing process so as to form a preform, and finally
v) drawing said preform into an optical fibre while heating the preform and subsequently cooling said optical fibre.

Such a method is known per se from US patent No. 4,314,833, in which the deposition rate is increased without fine glass particles being formed in the gas phase, and in which the inside diameter of the substrate tube is kept as small as possible after the deposition process in order to guarantee a trouble-free collapse. According to said US patent, it has surprisingly been found that a simple relationship exists between the inside diameter of the substrate tube during the deposition process and the maximum deposition rate at which no fine glass particles are formed in the gas phase. Three separate regions are distinguished in connection with the deposition process, viz. a first region, in which fine glass particles are formed in the gas phase, a second region, in which the lower limit for the inside diameter of the substrate tube at a specific deposition rate is indicated, and finally a third region between said first and said second region, which third region defines the preferred process conditions. It can furthermore be noted in this connection that the substrate tube to be coated with glass layers and the thickness of the layers to be deposited by means of a deposition process must be selected such that the subsequent collapse treatment will not cause any additional problems. The fact is that if the inside diameter of the substrate tube at the end of the deposition process is too large, certain problems may occur during the collapse treatment, an elliptical preform may be formed, for example, or a preform that sags or exhibits other geometric faults, in connection with which it is indicated that the shorter the duration of the collapse treatment, the greater the chance that a certain degree of rotational symmetry in the preform will be obtained. From the examples given in said US patent specification it follows that values of the Reynolds number range between about 30 and about 90 at all times.

One drawback of the aforesaid US patent specification as pointed out by the present inventors is the fact that it only shows experimental results of deposition rates varying from 0.08 g/min to 0.45 g/min, which values are insufficiently high these days. In addition to that, the diagram that is shown in the aforesaid US patent specification does not provide any information with regard to higher deposition rates, for example deposition rates of more than 2.0 g/min. Consequently, the present inventors have found that the process conditions suggested in the aforesaid US patent specification no longer apply at deposition rates of more than 2 g/min.

One aspect of the present invention is thus to provide a method of manufacturing an optical fibre, which method precisely defines the process conditions required for high deposition rates.

Yet another aspect of the present invention is to provide a method of manufacturing an optical fibre, which method defines process conditions such that the formation of fine glass particles in the gas phase is prevented through the use of a high deposition rate.

Yet another aspect of the present invention is to provide a method of manufacturing an optical fibre, which method leads to a substrate tube geometry following the deposition of one or more glass layers onto the interior of the substrate tube such that the collapsing step that follows will result in a rotationally symmetrical preform.

The method as referred to in the introduction is characterized in that the Reynolds number Re is in accordance with the formula 120 < Re < 285 during the deposition process according to step iii), wherein the Reynolds number is calculated on the basis of the reactants supplied to the substrate tube in step i) and step ii), under the temperature and pressure conditions that prevail in the interior of the substrate tube during step iii)

The aspects of the present invention are accomplished by carrying out the method as described above. The Reynolds number (Re) is a dimensionless parameter known to those skilled in this field of the art, which is composed of the product of the density, the gas flow rate and the inside diameter of the substrate tube divided by the viscosity, wherein the values are based on the gases supplied to the interior of the substrate tube, in particular the physical values associated with the mixtures of gases. The significance of the value of the Reynolds number in the present method will follow from the examples and comparative examples that are given herein.

In the present method it is in particular preferable to use a pressure of 4-35 mbar during step iii).

In addition to that it is preferable for the substrate tube to have a temperature of 1000-1150 °C during step iii).

It is also desirable to use a stoichiometric excess of oxygen of 1.8-5.0 during step ii).

Preferably, a plasma is generated in the interior of the substrate tube for initiating a reaction between the reactants supplied in steps i) and ii) in order to thus effect the deposition of one or more glass layers thereon, wherein it is preferred to move the plasma zone with respect to the substrate tube during step iii). Thus it is preferable to carry out the present method according to the Plasma Chemical Vapour Deposition (PCVD) process.

Surprisingly, the present inventors have realised that it is not the deposition rate that is in particular suitable for characterising the desired process conditions, as suggested in US patent specification No. 4,314,833 as discussed above, which parameter is in fact a derived quantity, but rather the total gas flow rate, viz. the glass-forming gases supplied to the interior of the substrate tube.

If a substrate tube having a temperature of less than 1000 °C is used in during step iii), undesirable incorporation of chlorine in the deposited glass layers will take place. More in particular, a temperature of less than 1000 °C will lead to chlorine-containing bubbles being formed in the deposited layers during the contraction or collapsing process following the deposition step, in which contraction or collapsing step the substrate tube coated with the deposited layers is subjected to temperatures of more than 1800 °C. A preform in which bubbles are present in the deposited layers is unsuitable for being drawn into an optical fibre. On the other hand, if a substrate tube temperature of more than 1150 °C is used, this will lead to deformation, in particular so-called unroundness, of the substrate tube. Although a quartz substrate tube usually starts to deform at a temperature of about 1800 °C, the low pressure conditions that apply in this case, in combination with long deposition times of more than 4 hours, may result in a slight deformation of the substrate tube. Such deformation will lead to unroundness and/or eccentricity of the final optical fibre, as a consequence of which particular properties, such as polarization mode dispersion for single mode fibres or bandwidth for multimode fibres, will become uncontrollable and lead to failure. With regard to the pressure within the substrate tube during step iii) of the present invention it applies that many impurities are incorporated in the deposited glass layers when a value higher than 35 mbar is used, which is undesirable. In particular the incorporation of chlorine will lead to problems, especially because bubbles are formed. On the other hand, if the pressure within the substrate tube is lower than 4 mbar during step iii) of the present invention, the plasma will become longer and the plasma intensity will decrease at a constant high-frequency capacity, which will result in an insufficient conversion of chlorides into oxides. As regards the stoichiometric excess of oxygen used in the present method it applies that an excess of oxygen of less than 1.8 will lead to problems with regard to the stability of the plasma, resulting in undesirable incorporation of chlorine in the deposited layers. On the other hand, if a stoichiometric excess of oxygen of more than 5.0 is used, the gas flow rate in the plasma will be too high, so that the residence time of the reactive gases in the reaction zone will be too short and the conversion efficiency will thus decrease undesirably. Moreover, undesirable formation of fine glass particles will occur. In this connection it may furthermore be noted that the coupled plasma capacity required for the deposition process is directly related to the amount of glass-forming molecules being supplied to the interior of the substrate tube.

The present inventors have thus found that in order to obtain an SiO₂ (and any dopants) incorporation efficiency of more than 90%, the Reynolds number must not exceed 285 so as to prevent the formation of fine glass particles, in particular in the case of a maximum stoichiometric excess of oxygen. The present inventors have furthermore found that the Reynolds number must be at least 120, because the plasma will exhibit a considerable degree of instability if said value is lower, in particular in the case of a minimum stoichiometric excess of oxygen.

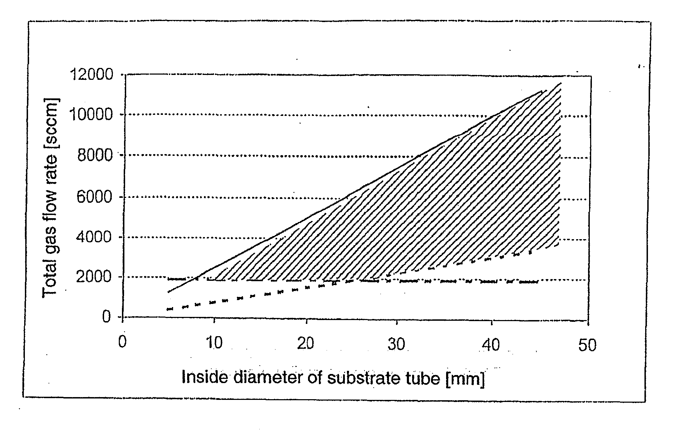

The appended Figure shows the so-called working range or process window for PCVD, wherein the inside diameter of the substrate tube (mm) is plotted on the horizontal axis and the total flow rate of the gases being supplied to the interior of the substrate tube is plotted on the vertical axis. In order to obtain a deposition efficiency of more than 90%, at a deposition rate of more than 2 g/min, the working range, within which the aforesaid requirements are met, preferably lies between the upper line, which corresponds to a Reynolds number of 285, and the lower line, which corresponds to a Reynolds number of 120. The appended Figure also shows a minimum deposition rate of 2 g/minute.

The present invention will be explained in more detail hereinafter by means of a number of examples and comparative examples, in which connection it should be noted, however, that the present invention is by no means limited to such special examples.

### Example 1.

A glass substrate tube having an inside diameter of 26 mm was internally coated with layers of SiO₂ and GeO₂-doped SiO₂. Said layers were deposited by means of a PCVD technique, using an overall deposition rate of 2.5 g/min. The excess of oxygen amounted to 3.5, and the maximum total gas flow through the interior of the substrate tube was set at 4196 sccm. The minimum pressure in the substrate tube during the deposition of the layers was maintained at a value of more than 10 mbar, and the maximum pressure in the substrate tube during the deposition process was maintained at a value of less than 30 mbar. At the start of the deposition process, at which point the inside diameter of the substrate tube was 26 mm, the Reynolds number for the gas mixture was 184 at a temperature of 1100 °C inside the substrate tube. The deposition of the layers was stopped once the inside diameter of the substrate tube amounted to 18 mm, at which point the Reynolds number was 275. Following that, the tube was contracted into a massive preform, from which a high-quality optical fibre was obtained.

### Examples 2-4 and comparative examples 1-2.

Substrate tubes having an inside diameter of 20 mm were internally coated with SiO₂ for 1 hour, using a PCVD technique. The amount of SiCl₄ that was added amounted to 933 sccm each time (sufficient for a deposition rate of at least 2.5 g/min with a deposition efficiency of 100%). The excess of oxygen was varied with each new experiment, so that also the total flow and the Reynolds number varied with each new experiment. The other conditions (the pressure and the temperature) were maintained at the same values as in the above Example 1. At the end of each experiment the deposition efficiency was calculated on the basis of the measured weight increase of the substrate tube. The results are shown in the Table below.

| Example | O₂ excess | Reynolds number | Deposition efficiency |
|---|---|---|---|
| Example 2 | 3 | 228 | 95% |
| Example 3 | 4.5 | 261 | 93% |
| Example 4 | 5 | 272 | 91% |
| Comparative example 1 | 5.5 | 285 | 89% |
| Comparative example 2 | 6 | 295 | 80% |

From the Table that is shown above it follows that the deposition efficiency is lower than 90 percent if the Reynolds number is higher than 285, which value is critical, therefore.

### Example 5.

A glass substrate tube having an inside diameter of 30 mm was internally coated with layers of SiO₂ and GeO₂-doped SiO₂. Said layers were deposited by means of a PCVD technique. The flow of SiCl₄, amounted to 750 sccm at the beginning of the deposition process, and it was gradually decreased to a value of 660 sccm at the end of the deposition process. The flow of GeCl₄ increased from 0 to a value of 90 sccm at the end of the deposition process. The flow of oxygen was kept at a constant value of 2500 sccm during the deposition process. The minimum pressure in the substrate tube during the deposition process was maintained at a value of more than 10 mbar, and the maximum pressure in the substrate tube the during the deposition process was maintained at a value of less than 30 mbar. At the start of the deposition process, at which point the inside diameter of the substrate tube was 26 mm, the Reynolds number for the gas mixture was 126 at a temperature of 1100 °C inside the substrate tube. The deposition of the layers was stopped once the inside diameter of the substrate tube amounted to 20 mm, at which point the Reynolds number was 192. Following that, the tube was contracted into a massive preform, from which a high-quality multimode optical fibre was obtained.

### Comparative examples 3-4.

A substrate tube having an inside diameter of 29 mm was coated with glass layers, using a PCVD technique and a constant flow of SiCl₄ of 784 sccm. In Comparative Example 3, the excess of oxygen was slowly decreased from 5 to 1.5. Instabilities occurred in the plasma when the excess of oxygen amounted to 1.8, at which point the Reynolds number was 119, which instabilities manifested themselves in the form of serious pressure variations in the substrate tube. A further decrease of the excess of oxygen finally led to the plasma being extinguished.

In Comparative Example 4, the above experiment was repeated, in this case using a substrate tube having an inside diameter of 37 mm and a constant flow of SiCl₄ of 1005 sccm. In this Comparative Example, too, the plasma was unstable when the excess of oxygen amounted to 1.8 or less, at which point the Reynolds number was 120.

## Claims

1. A method of manufacturing an optical fibre by carrying out one or more a chemical vapour deposition reactions in a glass substrate tube, which method comprises the following steps:
i) supplying one or more doped or undoped glass-forming precursors to the substrate tube,
ii) supplying a stoichiometric excess of oxygen to the substrate tube,
iii) setting up a reaction in the substrate tube between the reactants supplied in steps i) and ii) so as to effect the deposition of one or more glass layers on the interior of the substrate tube,
iv) subjecting the substrate tube thus coated in step iii) to a collapsing process so as to form a preform, and finally
v) drawing said preform into an optical fibre while heating the preform and subsequently cooling said optical fibre, **characterized in that** the Reynolds number Re is in accordance with the formula 120 < Re < 285 during the deposition process according to step iii), wherein the Reynolds number is calculated on the basis of the reactants supplied to the substrate tube in step i) and step ii), under the temperature and pressure conditions that prevail in the interior of the substrate tube during step iii).

2. A method according to claim 1, **characterized in that** a pressure of 4-35 mbar is used during step iii).

3. A method according to any one or more of the preceding claims, **characterized in that** the substrate tube has a temperature of 1000-1150 °C during step iii).

4. A method according to any one or more of the preceding claims, **characterized in that** a stoichiometric excess of oxygen of ranging from 1.8-5.0 is used during step ii).

5. A method according to any one or more of the preceding claims, **characterized in that** step iii) comprises the forming of a plasma within the substrate tube so as to effect the deposition of one or more glass layers.

6. A method according to claim 5, **characterized in that** the plasma zone is moved with respect to the substrate tube during step iii).

7. A method according to any one or more of the preceding claims, **characterized in that** a deposition rate of at least 2 g/min is used in step iii).

## Patentansprüche

1. Verfahren zum Herstellen einer optischen Faser durch Ausführen einer oder mehrere chemischer Dampfabscheidungsreaktionen in einer Glassubstratröhre, wobei das Verfahren die folgenden Schritte aufweist:
i) Zuführen eines oder mehrerer dertierter oder undortierter Glasbildungsvorläufer in die Substratröhre,
ii) Zuführen eines stöchiometrischen Überschusses von Sauerstoff in die Substratröhre,
iii) Aufbauen einer Reaktion in der Substratröhre zwischen den Reaktanden, die in den Schritten i) und ii) zugeführt wurde, um die Abscheidung einer oder mehrere Glasschichten auf die Innenseite der Substratröhre auszuführen,
iv) Unterziehen der so im Schritt iii) beschichteten Substratröhre einem Zusammendrückungsprozeß, um eine Vorform zu bilden, und schließlich
v) Ziehen der Vorform zu einer optischen Faser, während die Vorform erwärmt wird, und anschließendes Abkühlen der optischen Faser, **dadurch gekennzeichnet, daß** während des Abscheidungsprozesses gemäß Schritt iii) die Reynoldssche Zahl Re der Formel 120 < Re < 285 entspricht, wobei die Reynoldssche Zahl auf der Grundlage der Reaktanden berechnet wird, die der Substratröhre in Schritt i) und Schritt ii) zugeführt werden, unter den Temperatur- und Druckbedingungen, die im Inneren der Substratröhre während Schritt iii) vorherrschen.

2. Verfahren nach Anspruch 1, **dadurch gekennzeichnet, daß** während des Schrittes iii) ein Druck von 4 - 35 mbar verwendet wird.

3. Verfahren nach einem oder mehreren der vorhergehenden Ansprüche, **dadurch gekennzeichnet, daß** die Substratröhre während des Schrittes iii) eine Temperatur von 1000 - 1150°C aufweist.

4. Verfahren nach einem oder mehreren der vorhergehenden Ansprüche, **dadurch gekennzeichnet, daß** während des Schrittes ii) ein stöchiometrischer Überschuß von Sauerstoff verwendet wird, der von 1,8 - 5,0 reicht.

5. Verfahren nach einem oder mehreren der vorhergehenden Ansprüche, **dadurch gekennzeichnet, daß** Schritt iii) die Bildung eines Plasmas in der Substratröhre aufweist, um die Abscheidung einer oder mehrerer Glasslhichten auszuführen.

6. Verfahren nach Anspruch 5, **dadurch** gekenzizeichnet, daß die Plasmazone bezüglich der Substratröhre während Schritt iii) bewegt wird.

7. Verfahren nach einem oder mehreren der vorhergehenden Ansprüche, **dadurch gekennzeichnet, daß** eine Abscheidungsgeschwindigkeit von mindestens 2 g/min im Schritt iii) verwendet wird.

## Revendications

1. Procédé pour fabriquer une fibre optique par mise en oeuvre d'une ou plusieurs réactions de déposition chimique en phase vapeur dans un tube de substrat en verre, lequel procédé comprend les étapes suivantes :
i) délivrance d'un ou plusieurs précurseurs de vitrification dopés ou non dopés au tube de substrat,
ii) délivrance d'un excès stoechiométrique d'oxygène au tube de substrat,
iii) mise en oeuvre d'une réaction dans le tube de substrat entre les réactifs délivrés dans les étapes i) et ii) de façon à effectuer la déposition d'une ou plusieurs couches de verre sur l'intérieur du tube de substrat,
iv) soumission du tube de substrat ainsi revêtu dans l'étape iii) à un procédé d'écrasement de façon à former une ébauche, et finalement
v) étirage de ladite ébauche en une fibre optique cependant que l'ébauche est chauffée et ensuite refroidissement de ladite fibre optique,
**caractérisé en ce que** le nombre de Reynolds Re est conforme à la formule 120 < Re < 285 durant le procédé de déposition selon l'étape iii), où le nombre de Reynolds est calculé sur la base des réactifs délivrés au tube de substrat dans l'étape i) et l'étape ii), dans des conditions de température et de pression qui prévalent dans l'intérieur du tube de substrat durant l'étape iii).

2. Procédé selon la revendication 1, **caractérisé en ce qu'**une pression de 4 à 35 mbar est utilisée durant l'étape iii).

3. Procédé selon une ou plusieurs des revendications précédentes, **caractérisé en ce que** le tube de substrat a une température de 1000-1150°C durant l'étape iii).

4. Procédé selon une ou plusieurs des revendications précédentes, **caractérisé en ce qu'**un excès stoechiométrique d'oxygène situé dans la plage allant de 1,8 à 5,0 est utilisé durant l'étape ii).

5. Procédé selon une ou plusieurs des revendications précédentes, **caractérisé en ce que** l'étape iii) comprend la formation d'un plasma à l'intérieur du tube de substrat de façon à effectuer la déposition d'une ou plusieurs couches de verre.

6. Procédé selon la revendication 5, **caractérisé en ce que** la zone de plasma est déplacée vis-à-vis du tube de substrat durant l'étape iii).

7. Procédé selon une ou plusieurs des revendications précédentes, **caractérisé en ce qu'**une vitesse de déposition d'au moins 2 g/min est utilisée dans l'étape iii).
